**Europäisches Patentamt**

**European Patent Office**

**Office européen des brevets**

(19)

(11) Veröffentlichungsnummer : **0 443 117 B1**

(12)

# EUROPÄISCHE PATENTSCHRIFT

(45) Veröffentlichungstag der Patentschrift :
**22.02.95 Patentblatt 95/08**

(51) Int. Cl.$^6$ : **H04L 25/22, H04B 1/58**

(21) Anmeldenummer : **90122977.3**

(22) Anmeldetag : **30.11.90**

(54) **Analoge Leitungsanschaltung.**

(30) Priorität : **22.02.90 DE 4005644**

(43) Veröffentlichungstag der Anmeldung :
**28.08.91 Patentblatt 91/35**

(45) Bekanntmachung des Hinweises auf die
Patenterteilung :
**22.02.95 Patentblatt 95/08**

(84) Benannte Vertragsstaaten :
**AT BE CH DE DK LI**

(56) Entgegenhaltungen :
**DE-B- 2 714 803**
**NTZ ARCHIV: Bd. 11, Nr. 5, September**
**1989,BERLIN DE Seiten 211 - 219; U TRICK:**
**'Ein Vergleich von Integrierten Schaltungen**
**für die U-Schnittstelle im digitalisierten Orts-**
**netz'**

(73) Patentinhaber : **SIEMENS**
**AKTIENGESELLSCHAFT**
**Wittelsbacherplatz 2**
**D-80333 München (DE)**

(72) Erfinder : **Schenk, Heinrich, Dr.-Ing.**
**Fatimastrasse 3**
**W-8000 München 71 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 443 117 B1

## Beschreibung

Die Erfindung betrifft eine analoge Leitungsanschaltung nach dem Oberbegriff des Patentanspruchs 1.

Eine solche Leitungsanschaltung ist z.B. aus der Druckschrift NTZ Archiv Bd. 11 (1989) H. 5, Seiten 211 bis 219, bekannt.

In modernen Kommunikationsnetzen werden Sprache, Texte, Daten oder Bilder in digitale Signale umgesetzt übertragen. Zur Übertragung werden die digitalen Signale in für das Übertragungsmedium, hier beispielsweise eine elektrische Leitung, geeignete Impulse umcodiert. Als Beispiel seien hier die binäre, ternäre und quaternäre Codierung genannt, bei der zwei bis vier Amplitudenstufen verwendet werden. Je mehr Amplitudenstufen ein elektrisches Signal aufweist, desto problematischer ist empfangsseitig seine Decodierung. Dies Problem wird besonders gravierend, wenn über eine Zweidrahtleitung Nachrichten gleichzeitig in beiden Richtungen übertragen werden. Damit die eigene Sendespannung nicht auf die Empfangseinrichtung einwirkt, werden spezielle Leitungsanschaltungen verwendet, die aus Toleranzgründen als symmetrische Gabelschaltungen ausgebildet sind. Die bisher bekannten Leitungsanschaltungen für digitale Signale sind mit Widerständen realisiert, wodurch jedoch eine Kompensation der Sendespannung nur bedingt möglich ist.

Aufgabe der Erfindung ist es, eine einfach abgleichbare Leitungsanschaltung mit geringem Schaltungsaufwand anzugeben.

Diese Aufgabe wird durch die im Anspruch 1 angegebenen Merkmale gelöst.

Vorteilhafte Ausbildungen der Erfindung sind in den abhängigen Ansprüchen angegeben.

Besonders vorteilhaft ist, daß nur ein komplexer Widerstand benötigt wird und abgeglichen werden muß.

Vorteilhaft ist es, wenn die zusätzlichen Widerstände wesentlich hochohmiger als der transformierte Leitungseingangswiderstand und die entsprechenden Anschlußwiderstände gewählt werden. Hierdurch bleibt der Leistungsverbrauch gering.

Aus Toleranzgründen der Bauelemente sollte die Leitungsanschaltung symmetrisch aufgebaut werden. Dann sind auch die Anforderungen an die Gleichspannungsunterdrückung einer Empfangseinrichtung gering.

Die Erfindung wird anhand eines Ausführungsbeispieles näher erläutert.

Es zeigen:

Fig. 1      eine bekannte Leitungsanschaltung,

Fig. 2      eine erfindungsgemäß Leitungsanschaltung und

Fig. 3      einen komplexen Widerstand.

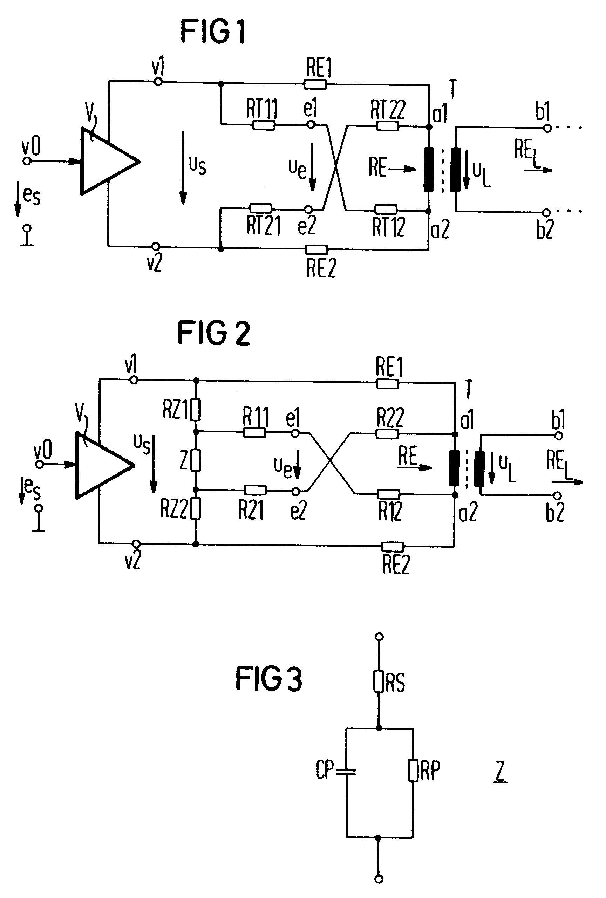

Die in Figur 1 dargestellte bekannte Leitungsanschaltung (vgl. a. Bild 7 der o.a. Druckschrift) enthält einen Verstärker V mit symmetrischen Ausgängen v1 und v2. Die Ausgangswiderstände sind vernachlässigbar klein. Der erste Verstärkerausgang v1 ist über einen ersten Anschlußwiderstand RE1 mit einem ersten Anschluß a1 der ersten Wicklung eines Übertragers T verbunden. In derselben Weise ist der zweite Verstärkerausgang v2 über einen zweiten Anschlußwiderstand RE2 mit einem zweiten Anschluß a2 der ersten Wicklung des Übertragers verbunden. Ein erster Spannungsteiler mit den Teilerwiderständen RT11 und RT12 ist zwischen dem ersten Verstärkerausgang v1 und dem zweiten Anschluß a2 eingeschaltet, während ein zweiter Spannungsteiler mit den Teilerwiderständen RT21 und RT22 zwischen dem zweiten Verstärkerausgang v2 und dem ersten Anschluß a1 liegt. Die Verbindungspunkte der Teilerwiderstände bilden die Empfangs-Anschlußpunkte e1 und e2 für den Anschluß einer hier nicht dargestellten Empfangseinrichtung. Die Übertragungsleitung ist an die Anschlußpunkte b1 und b2 einer zweiten Wicklung des Übertragers T angeschaltet. Als Verstärker kann beispielsweise der Baustein PEB 20902 der Firma Siemens verwendet werden.

Die am Eingang der Leitung empfangene Spannung $U_L$ wird auf die erste Wicklung des Übertragers T transformiert und an den Anschlußpunkten e1 und e2 - durch die Teilerwiderstände bedämpft - als Empfangsspannung $u_e$ der Empfangseinrichtung zugeführt, die zwei Differenzeingänge aufweist. Die Ausgangswiderstände des Verstärkers V sind niederohmig, so daß eine Anpassung des Eingangswiderstandes der Übertragungsleitung durch die Anschlußwiderstände erzielt wird. Das am Eingang v0 des Verstärkers anliegende Eingangssignal $e_s$ wird an den symmetrischen Verstärkerausgängen - wie bei einem Differenzverstärker - einmal gleichphasig und einmal invertiert abgegeben.

Die zwischen den Verstärkerausgängen v1 und v2 liegende Sendespannung $u_s$ darf der Empfangsspannung $u_e$ nicht überlagert werden. Setzt man voraus, daß sich der Eingangswiderstand RE des Übertragers - dieser setzt sich aus dem auf die erste Wicklung transformierten Eingangswiderstand $RE_L$ der Übertragungsleitung und den Widerständen des Übertragers selbst zusammen - betragsmäßig dem doppelten Wert wie jeder Anschlußwiderstand RE1, RE2 aufweist, dann erhält man eine optimale Dämpfung der Sendespannung bei einem Widerstandsverhältnis der Teilerwiderstände RT11 zu RT12 beziehungsweise RT21 zu RT22 von 2:1. Wegen des komplexen Eingangswiderstandes ist jedoch eine vollständige Kompensation der Sendespannung nicht zu erreichen. Eine Verbesserung ließe sich durch Verwendung von komplexen Widerständen anstelle der Teilerwiderstände oder der Anschlußwiderstände erzielen. Hierdurch steigt aber nicht nur die Anzahl

2

der Bauelemente erheblich, es werden auch eng tolerierte Kapazitäten (und gegebenenfalls Induktivitäten) benötigt, da die komplexen Widerstände paarweise abgeglichen werden müssen. Darüber hinaus ist auch ein zusätzlicher Abgleich der Teilerwiderstände möglich.

Die in Figur 2 dargestellte erfindungsgemäße Leitungsanpassung enthält ebenfalls einen Verstärker V, dessen symmetrische Ausgänge v1 und v2 wieder über die Anschlußwiderstände RE1 und RE2 mit dem Übertrager T verbunden sind. Sie enthält jedoch eine zusätzliche Reihenschaltung aus einem ersten ohmschen Zusatzwiderstand RZ1, einem komplexen Widerstand Z und einem zweiten ohmschen Zusatzwiderstand RZ2, die zwischen den Verstärkerausgängen angeordnet ist. Sie enthält auch wieder zwei Spannungsteiler, deren Teilerwiderstände R11, R12 und R21, R22 jedoch anders dimensioniert sind. Der erste Teilerwiderstand R11 ist anstelle an den ersten Verstärkerausgang v1 an dem Verbindungspunkt des ersten Zusatzwiderstandes RZ1 und des komplexen Widerstandes Z angeschaltet. In derselben Weise ist der erste Teilerwiderstand R21 des zweiten Spannungsteilers an dem Verbindungspunkt des zweiten Zusatzwiderstandes RZ2 und des komplexen Widerstandes angeschaltet. Die Anschlußwiderstände RE1, der Eingangswiderstand RE und der zweite Anschlußwiderstand RE1 bilden jetzt einen Zweig einer Brückenschaltung, deren zweiter Zweig aus der Reihenschaltung des ersten Zusatzwiderstandes RZ1, des komplexen Widerstandes Z und des zweiten Zusatzwiderstandes RZ2 gebildet wird. Bezogen auf die Empfangs-Anschlußpunkte e1, e2 erhält man eine vollständige Kompensation der Sendespannung $u_s$, wenn die Widerstände der Reihenschaltung RZ1, Z, RZ2 proportional zu den Widerstandswerten von RE1, RE, RE2 sind und die Teilerwiderstände R11 = R22 und R21 = R12 sind.

Wie bereits erwähnt, läßt sich die Anschlußschaltung am genauesten symmetrisch aufbauen. In diesem Fall weisen beide Zusatzwiderstände denselben Widerstandswert auf, ebenso beide Anschlußwiderstände. Auch sind alle Teilerwiderstände R11 bis R22 gleich groß. Dies hat auch den Vorteil, daß nur geringe Anforderungen an die Gleichtaktunterdrückung der Empfangseinrichtung gestellt werden.

Um den Stromverbrauch niedrig zu halten, werden nicht nur die Teilerwiderstände hochohmig gewählt sondern auch die Zusatzwiderstände RZ1, RZ2 und damit auch der komplexe Widerstand Z. (R11, ... $\geqq$ 10 × RE1,...; RZ1, ... $\geqq$ 10 × RE1, ...)

Für den komplexen Widerstand Z kann ein beliebiges Netzwerk eingesetzt werden, daß den komplexen Eingangswiderstand RE, der wesentlich von der Übertragungsleitung bestimmt wird, möglichst gut nachbildet. Bei eng tolerierten ohmschen Widerständen reicht es meist aus, nur den komplexen Widerstand Z abzugleichen. Natürlich können Widerstandstoleranzen auch durch Verändern eines der Brückenwiderstände oder eines Zusatzwiderstandes ausgeglichen werden.

Der Widerstandswert der Zusatzwiderstände und der Teilerwiderstände sollte mindestens den zehnfachen Wert der Anschlußwiderstände aufweisen.

Für den komplexen Widerstand kann ein beliebiges Netzwerk eingesetzt werden, das den komplexen Eingangswiderstand RE, der im wesentlichen von der angeschalteten Übertragungsleitung bestimmt wird, nachgebildet ist. Ein einfaches Netzwerk für den komplexen Widerstand Z ist in Figur 3 dargestellt. Es besteht aus einem ohmschen Serienwiderstand RS, der in Reihe mit der Parallelschaltung eines Parallelwiderstandes RP und eines Parallelkondensators CP geschaltet ist.

Allgemein gilt

$$Z \approx \frac{RZ1 + RZ2}{RE1 + RE2} \times RE$$

Wenn der Ausgangswiderstand zwischen den Verstärkerausgängen niederohmig ist, wird er RE1 + RE2 = RE gewählt. Ist dagegen der Verstärkerwiderstand nicht mehr zu vernachlässigen, werden die Anschlußwiderstände entsprechend verringert.

## Patentansprüche

1. Analoge Leitungsanschaltung mit einem Verstärker (V), der zwei symmetrische Ausgänge (v1, v2) aufweist, von denen der erste Ausgang (v1) über einen ersten ohmschen Anschlußwiderstand (RE1) mit einem ersten Anschluß (a1) und der zweite Ausgang (v2) über einen zweiten ohmschen Anschlußwiderstand (RE2) mit einem zweiten Anschluß (a2) der ersten Wicklung eines Übertragers (T) verbunden ist, an dessen zweite Wicklung eine Übertragungsleitung angeschaltet ist, mit zwei aus jeweils zwei Teilerwiderständen (R11, R12; R21, R22) bestehenden Spannungsteilern, von denen der erste vom zweiten Anschluß (a2) des Übertragers (T) an den ersten Ausgang (v1) des Verstärkers (V) und der zweite Spannungsteiler (R21, R22) vom ersten Anschluß (a1) des Übertragers (T) an dem zweiten Ausgang (v2) des Verstärkers (V) geführt ist, und bei denen die Verbindungspunkte der Teilerwiderstände (R11, R12; R21, R22) Empfangs-Anschlußpunkte (e1, e2) bilden, an die eine Empfangseinrichtung anschaltbar ist,

**dadurch gekennzeichnet,**
daß der erste Spannungsteiler (R11, R12) über einen ersten ohmschen Zusatzwiderstand (RZ1) an den ersten Ausgang (v1) des Verstärkers (V) und der zweite Spannungsteiler (R21, R22) über einen zweiten ohmschen Zusatzwiderstand (RZ2) an den zweiten Ausgang (v2) des Verstärkers (V) angeschaltet ist, daß ein komplexer Widerstand (Z) zwischen den Verbindungspunkten der Zusatzwiderstände (RZ1, RZ2) mit den Spannungsteilern (R11, R12; R21, R22) eingeschaltet ist, daß jeweils der erste an einen Zusatzwiderstand (RZ1, RZ2) angeschaltete Teilerwiderstand (R11, R21) eines Spannungsteilers und der zweite an einen Anschlußpunkt (a2, a1) angeschaltete Teilerwiderstand (R22, R12) des anderen Spannungsteilers gleich sind und daß das Verhältnis des komplexen Widerstandes Z zu den zusätzlichen Widerständen (RZ1, RZ2) möglichst dem Verhältnis des auf die erste Wicklung des Übertragers (T) transformierten Eingangswiderstandes (RE) der Übertragungsleitung zu den entsprechenden Anschlußwiderständen (RE1, RE2) entspricht.

2. Leitungsanschaltung nach Anspruch 1,
**dadurch gekennzeichnet,**
daß die zusätzlichen Widerstände (RZ1, RZ2) und der komplexe Widerstand (Z) mindestens den zehnfachen Widerstandswert der Anschlußwiderstände (RE1, RE2) bzw. des transformierten Eingangswiderstandes (RE) aufweisen.

3. Leitungsanschaltung nach Anspruch 1 oder 2,
**dadurch gekennzeichnet,**
daß alle Teilerwiderstände (R11, R12, R21, R22) dieselben Widerstandswerte aufweisen.

4. Leitungsanschaltung nach einem der vorhergehenden Ansprüche,
**dadurch gekennzeichnet,**
daß die Widerstandswerte der Teilerwiderstände (R11, R12, R21, R22) mindestens den zehnfachen Wert der Anschlußwiderstände (RE1, RE2) aufweisen.

5. Leitungsanschaltung nach einem der vorhergehenden Ansprüche,
**dadurch gekennzeichnet,**
daß als komplexer Widerstand (Z) die Reihenschaltung eines Serienwiderstandes (RS) mit der Parallelschaltung eines Parallelwiderstandes (RP) und einer Parallelkapazität (CP) vorgesehen ist.

6. Leitungsanschaltung nach einem der vorhergehenden Ansprüche,
**dadurch gekennzeichnet,**
daß der komplexe Widerstand (Z) abgleichbar ist.

7. Analoge Leitungsanschaltung nach einem der vorhergehnden Ansprüche,
**dadurch gekennzeichnet,**
daß einer der Teilerwiderstände (R11, R12, R21, R22) abgleichbar ist.

## Claims

1. Analog line connection having an amplifier (V) which has two symmetrical outputs (v1, v2), of which the first output (v1) is connected via a first connecting non-reactive resistor (RE1) to a first connection (a1) and the second output (v2) via a second connecting non-reactive resistor (RE2) to a second connection (a2) of the first winding of a transformer (T), to whose second winding a transmission line is connected, having two voltage dividers comprising in each case two divider resistors (R11, R12; R21, R22), of which voltage dividers the first is guided from the second connection (a2) of the transformer (T) to the first output (v1) of the amplifier (V) and the second voltage divider (R21, R22) is guided from the first connection (a1) of the transformer (T) to the second output (v2) of the amplifier (V), and in which the connecting points of the divider resistors (R11, R12; R21, R22) form receiving connection points (e1, e2), to which a receiving device can be connected, characterized in that the first voltage divider (R11, R12) is connected via a first additional non-reactive resistor (RZ1) to the first output (v1) of the amplifier (V) and the second voltage divider (R21, R22) is connected via a second additional non-reactive resistor (RZ2) to the second output (V2) of the amplifier (V), in that an impedance (Z) is connected between the connecting points of the additional resistors (RZ1, RZ2) with the voltage dividers (R11, R12; R21, R22), in that in each case the first divider resistor (R11, R21), connected to an additional resistor (RZ1, RZ2), of a voltage divider and the second divider resistor (R22, R12), connected to a connecting point (a2, a1), of the other voltage divider are equal, and in that the ratio of the impedance Z to the additional resistors (RZ1, RZ2) corresponds, if possible, to the ratio of the input resistance (RE), transformed to the first winding of the transformer (T), of the transmission line to the corresponding connecting resistors (RE1, RE2).

2. Line connection according to Claim 1, characterized in that the additional resistors (RZ1, RZ2) and the impedance (Z) have at least ten times the resistance value of the connecting resistors (RE1, RE2) or of the transformed input resistance (RE).

3. Line connection according to Claim 1 or 2, characterized in that all divider resistors (R11, R12, R21, R22) have the same resistance values.

4. Line connection according to one of the preceding claims, characterized in that the resistance values of the divider resistors (R11, R12, R21, R22) have at least ten times the value of the connecting resistors (RE1, RE2).

5. Line connection according to one of the preceding claims, characterized in that the series circuit formed by a series resistor (RS) and to the parallel circuit comprising a parallel resistor (RP) and a parallel capacitor (CP) is provided as impedance (Z).

6. Line connection according to one of the preceding claims, characterized in that the impedance (Z) can be adjusted.

7. Analog line connection according to one of the preceding claims, characterized in that one of the divider resistors (R11, R12, R21, R22) can be adjusted.

**Revendications**

1. Connexion analogique de ligne comportant un amplificateur (V), qui possède deux sorties (v1, v2), dont la première (v1) est reliée, par l'intermédiaire d'une première résistance ohmique de raccordement (RE1), à une première borne (a1) et dont la seconde sortie (v2) est reliée, par l'intermédiaire d'une seconde résistance ohmique de raccordement (RE2), à une seconde borne (a2) du premier enroulement d'un transformateur (T), au second enroulement duquel est connectée une ligne de transmission, et comportant deux diviseurs de tension constitués chacun par deux résistances de division (R11,R12,R21,R22), et dont le premier relie la seconde borne (a2) du transformateur (T) à la première sortie (v1) de l'amplificateur (V), tandis que le second diviseur de tension (R21,R22) relie la première borne (a1) du transformateur (T) à la seconde sortie (v2) de l'amplificateur (V), et dans lesquels les points de jonction des résistances (R11,R12; R21,R22) du diviseur forment des points (e1,e2) de raccordement de réception, auxquels peut être raccordé un dispositif de réception, caractérisée par le fait que le premier diviseur de tension (R11,R12) est raccordé, par l'intermédiaire d'une première résistance ohmique additionnelle (RZ1), à la première sortie (v1) de l'amplificateur (V), et le second diviseur de tension (R21,R22) est raccordé, par l'intermédiaire d'une seconde résistance ohmique additionnelle (RZ2), à la seconde sortie (v2) de l'amplificateur (V), qu'une résistance complexe (Z) est branchée entre les points de jonction des résistances additionnelles (RZ1,RZ2) et des diviseurs de tension (R11,R12;R21,R22), que respectivement la première résistance (R11,R21) d'un diviseur de tension, qui est raccordée à une résistance additionnelle (RZ1,RZ2), et la seconde résistance (R22,R12) de l'autre diviseur de tension, qui est raccordée à un point de raccordement (a2,a1), sont identiques, et que le rapport de la résistance complexe Z aux résistances additionnelles (RZ1,RZ2) correspond, autant que possible, au rapport de la résistance d'entrée (RE) de la ligne de transmission, transformée dans le premier enroulement du transformateur (T), aux résistances correspondantes de raccordement (RE1,RE2).

2. Connexion de ligne suivant la revendication 1, caractérisée par le fait que les résistances additionnelles (RZ1,RZ2) et la résistance complexe (Z) possèdent au moins une valeur égale au décuple de la valeur des résistances de raccordement (RE1,RE2) ou de la résistance d'entrée transformée (RE).

3. Connexion de ligne suivant la revendication 1 ou 2, caractérisée en ce que toutes les résistances (R11,R12, R21,R22) des diviseurs possèdent les mêmes valeurs résistives.

4. Connexion de ligne suivant l'une des revendications précédentes, caractérisée par le fait que les valeurs résistives des résistances (R11,R12,R21,R22) des diviseurs possèdent une valeur égale au moins au décuple des valeurs des résistances de raccordement (RE1,RE2).

5. Connexion de ligne suivant l'une des revendications précédentes, caractérisée par le fait qu'il est prévu, comme résistance complexe (Z), le circuit série formé d'une résistance série (RS) et du circuit parallèle formé d'une résistance parallèle (RP) et d'une capacité parallèle (CP).

6. Connexion de ligne suivant l'une des revendications précédentes, caractérisée par le fait que la résistance complexe (Z) peut être équilibrée.

7. Connexion de ligne analogique suivant l'une des revendications précédentes, caractérisée par le fait que l'une des résistances (R11,R12,R21,R22) des diviseurs peut être équilbrée.

## FIG 1

## FIG 2

## FIG 3